# EUROPEAN PATENT SPECIFICATION

(11) **EP 1 998 708 B1**
(45) Date of publication and mention of the grant of the patent: **12.08.2009**
(21) Application number: 07700028.9
(22) Date of filing: 01.01.2007
(51) Int. Cl.: A61C 17/02, A61C 5/04

(54) **DENTAL APPARATUS FOR IRRIGATING ROOT CANALS OF TEETH**
DENTALGERÄT ZUR SPÜLUNG VON WURZELKANÄLEN DER ZÄHNE
APPAREIL DENTAIRE POUR IRRIGUER LES CANAUX RADICULAIRES DES DENTS

(30) Priority: 27.03.2006 PL 37930006; 06.11.2006 PL 38098906
(43) Date of publication of application: 10.12.2008
(73) Proprietor: Borczyk, Roman, 40-533 Katowice (PL)
(72) Inventor: Borczyk, Roman, 40-533 Katowice (PL)
(74) Representative: Hudy, Ludwik
(86) International application number: PCT/IB2007/050001
(87) International publication number: WO 2007/110781

(56) References cited:
- US-A- 3 816 921
- US-A1- 2003 031 978
- US-B2- 6 464 498

## Description

The present invention relates to a dental apparatus applied to irrigate root canals of teeth with a medical solution introduced into a treated tooth.

Endodontics is a dental specialty and deals with treating teeth having devitalized (dead) tooth pulp. When treating teeth, in particular during a procedure called Root Canal Therapy (RCT), irrigation of the root canals with specific solutions is one of the treatment procedures. During this procedure, the root canals are irrigated with a fluid solution, for example with sodium hypochlorite. Usually, to irrigate the root canals, a syringe with a needle with a side opening is applied. Although the irrigation procedure must be performed with proper care and caution, quite often a drop or so of the solution escapes into the patient's mouth. This is why, after the completed irrigation of root canals, the solution must be extracted by a special suction device in order to ensure the complete removal of the solution from the patient's month. In this way irritation of the patient's mouth and/or possible harmful effects of the solution might be reduced or avoided. The removal of the medical solution is a complicated and time consuming procedure. Often, two persons are necessary to operate the suction device and to precisely co-ordinate the operation of the two instruments: the suction device and the syringe.

From a description of Polish Patent No. 161976 is known another instrument for irrigating root canals of teeth, namely, a syringe, which is connected with a two-way ball valve applied to alternately wash out root canals of teeth with various medical solutions, in particular with hydrogen peroxide solution and sodium hypochlorite solution. Two separate containers with irrigation solutions are connected with the two-way ball valve using two pipe connectors. First, the medical solutions are drawn from the containers and then are separately forced into the root canals of the teeth. This specific instrument is very complicated and does not solve the difficult problems of how to fully and hygienically remove the medical solutions applied during the root canal irrigation procedure, and how to remove them from the oral cavity.

In turn, from Specification Publication of Patent No. US 6,464,498 B2, entitled "Irrigation and aspiration handpiece" is known an assembly for aspirating and irrigating an endodontic or other cavity. This assembly includes a handpiece having at least one fluid discharge inlet and a vacuum outlet as well as a surgical needle connected to the handpiece by way of a L-shaped connector.

From Publication of US Patent Application No. US 2003/0031978 A1, entitled "Fluid material delivery devices and methods" are known devices and methods for the application of materials to an interior space of a tooth. The device has one or more syringe-like pistons and associated chambers for drawing a vacuum within an extirpated pulp chamber and applying cleansing, sealing, and/or filler materials into the tooth.

Furthermore, Specification Publication of Patent No. US 3,816,921 A entitled "Combined endodontic irrigating, injecting and sealing instrument" teaches a multi-purpose instrument with accessory or servicing tools having the capabilities of irrigating, evacuating, and sealing the root canal of a tooth. Internally the body of this instrument has a series of three decreasing diameter coaxial bores, with the largest of the bores being designed to receive a disposable medicator dental ampule, carpule or syringe.

The purpose of the invention is to provide an apparatus of compact construction which would enable secure irrigation of root canals of teeth with aggressive or therapeutic solutions, and subsequently remove the fluid flowing out from the root canal to the outside of the oral cavity effectively and hygienically.

A dental apparatus, which is the subject of this invention, solves the problems as outlined above. To exemplify the dental apparatus as disclosed herein, it contains a device introducing a cleansing and/or medical fluid into the root canals of teeth. This device has an elongated flexible feeder or a flexible pipe with a tip and may be manipulated by sliding and/or turning it in a chamber of a head. The head has an angled narrowing fitted with a bush-shaped ending provided with a duct connected with the chamber and used to guide the elongated flexible feeder of the device introducing the cleansing and/or medical fluid into the root canals. In addition, the dental apparatus is provided with a suction duct connected to the duct near its outlet and carrying at vacuum the cleansing and/ or medical fluid flowing out from the root canal to outside of an oral cavity.

In one of embodiments, the device introducing cleansing fluid is a syringe, which is used as a basic element, which is moveably, for example slidably and/or rotatably, mounted in a chamber made in a head. At an outlet protrusion of this syringe, there is a detachably mounted elongated flexible feeder or flexible pipe, which is inserted in the duct of the bush-shaped ending. In this embodiment the head has a cylindrically shaped chamber at one end, and at the other, an angled narrowing so situated that between it and the longitudinal axis of the head, there is an acute angle of between 30° and 60°. This angled narrowing comprises a bush-shaped ending with the duct in which lies the elongated flexible feeder. The duct is connected to a suction duct or channel to which is connected a suction device to simultaneously remove the applied fluid to the exterior of the oral cavity. Preferably, a flexible gasket is mounted on a front surface of the bush-shaped ending to form a seal between the bush-shaped ending and the tooth being treated.

The entire apparatus being characterized by the feature that the suction duct carrying off the cleansing fluid from the root canals of teeth has an inlet near an outlet of the duct of the bush-shaped ending. The duct of the bush-shaped ending is connected with the chamber of the head, and serves to insert the tip of the elongated flexible feeder of the device introducing the cleansing fluid into the root canals of teeth.

Preferably, the device introducing the cleansing fluid into the root canals of the teeth consists of a syringe with a plunger, or a syringe with a telescopic plunger, or a syringe with a plunger with a removable drive-rod mounted in a seat.

Preferably, there is a flexible gasket mounted on the front face of the bush-shaped ending, and the gasket can be pressed between the bush-shaped ending and the tooth to form a seal.

Preferably, the angled narrowing is situated so that between it and the longitudinal axis of the head, there is an acute angle of about 45°.

Preferably, the head is equipped with means to prevent the partial vacuum in the head to become too high excessively increase; this may consist of: an opening normally covered by a finger, a diaphragm, a sliding plate or similar, mounted on the inner surface covering an opening in the head or an opening in the wall of the head.

Preferably, the head is equipped with a circumferential flange and/or with a holder or a grip, and/or a web or means to keep the device rigid.

Instead of using a syringe inserted into the head, a separate pumping system can be used. The separate pumping system is fitted with a guide allowing the pumping system to be moved slidably and/or rotatably in the chamber. Such a system forces a cleansing and/or medical fluid into root canals of teeth, and an extracting means sucks out the fluid applied, and at the same carries outflowing fluid away outside the mouth.

Preferably, the guide is provided with an inlet orifice and an outlet protrusion connected with a fine flexible pipe to force the cleansing and/or medical fluid into the root canals of the teeth.

The apparatus, constructed in the way described above, forces the medical solution into the root canals of the teeth, and as soon as the turbulent whirling motion of the solution ceases, this specific design makes it possible to effectively proceed with the cleansing procedure, and, simultaneously, in a trouble-free and hygienic way to completely remove the used solution to the outside of the mouth. These two functions constitute the basic features and most important points of the invention. The head, the essential, replaceable element of the entire construction, is additionally characterized by the following qualities: very simple construction, low production cost, and, as a result, a low purchase price, thus, it could even be used as a disposable item (single use), individually for each patient. This fact is a further attribute and a strong point of the invention that guarantees that serious medical treatment procedures are performed under fully hygienic and sterile conditions.

A method is also disclosed for using the dental apparatus to fill root canals of teeth with the medical solution. The method comprises the steps of filling the device with the elongated flexible feeder with the cleansing and/or medical fluid, inserting the device with the elongated flexible feeder in a chamber of a head having a suction duct and an angled narrowing with a bush-shaped ending fitted with a duct and connected with the chamber and used to insert the elongated flexible feeder, introducing the elongated flexible feeder into the root canal of the tooth, creating vacuum in the suction duct and in the duct of the bush-shaped ending, feeding under pressure the cleansing and/or medical fluid into the tooth being treated, cleaning root canals of the tooth and washing out detritus from the root canals and removing the cleansing and/or medical fluid to the outside of the oral cavity through the suction duct.

Details and features of the system and method, its nature and various advantages will become more apparent from the accompanying drawing and the following detailed description of the preferred embodiments shown in a drawing, in which:

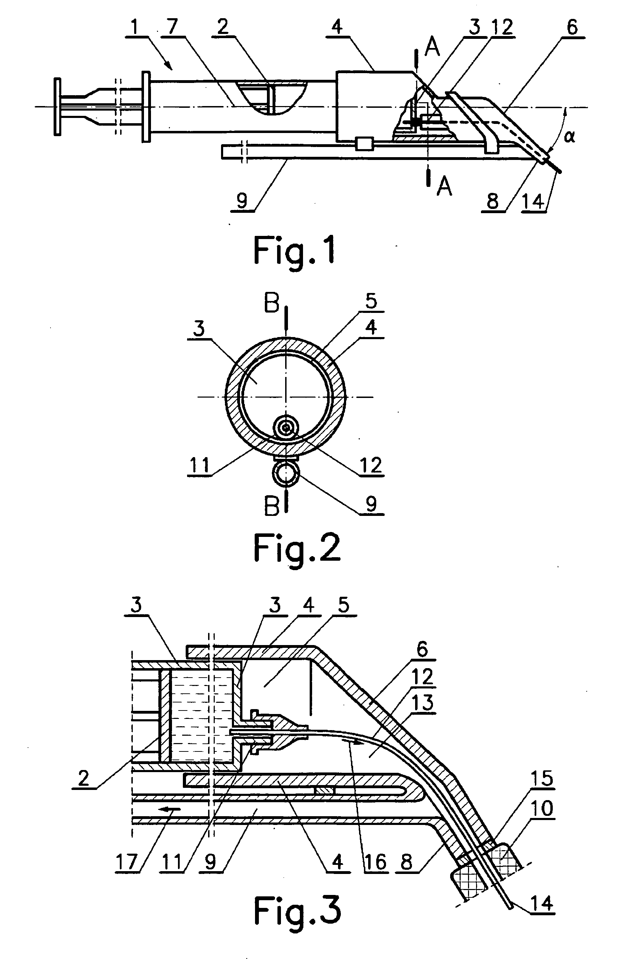

Fig. 1 shows a side-view of the dental apparatus with a partial cross-section;
Fig. 2 shows an enlarged cross-section of the dental apparatus along the A-A line as marked in Fig. 1;
Fig. 3 shows an enlarged longitudinal cross-section of the head of the dental apparatus along the B-B line as marked in Fig. 2;
Fig. 4 is a side-view of another design of the dental apparatus to irrigate the root canals of teeth;
Fig. 5 is a longitudinal cross-section through the dental apparatus with a single plunger syringe mounted in the chamber of the head;
Fig. 6 is a longitudinal cross-section through the dental apparatus with a telescopic syringe seated in the chamber of the head;
Fig. 7 is a view of the dental apparatus adapted for connecting it to a separate pumping system to supply the solution; and
Fig. 8 is an enlarged longitudinal cross-section through the dental apparatus adapted for connecting it to a separate pumping system to supply the solution shown in Fig. 7.

The embodiments presented in the drawings are intended only for illustrative purpose and do not limit the scope of the invention as defined by the accompanying claims.

A dental apparatus to irrigate root canals of teeth, according to the embodiment made for the purpose of exemplifying it, is constructed and developed on the basis of a known syringe 1 with a plunger 2 forming a device introducing a cleansing and/or medical fluid into the root canals of teeth. On an outlet end 3 of the syringe 1 is mounted a head 4, which is separably pushed onto the outlet end 3. The head constitutes the essence of the present invention. The head 4 has a chamber 5, cylindrical in shape at one end, and, the front part of the head forms an angled narrowing 6 situated at an acute angle α of between 30° and 60°, ideally about 45° relative to the longitudinal axis 7. The angled narrowing 6 comprises a bush-shaped ending 8 with a duct, which has an opening that leads to a suction duct 9, connected to a pipe or extraction duct. Preferably, the pipe or extraction duct then leads to a flexible discharge pipe. As soon as the root canals of a tooth 10 under treatment have been irrigated, the used solution is removed along the suction duct 9 to the outside of the mouth. In the chamber 5 of the head 4, there is situated an outlet protrusion 11 of the syringe 1. An elongated flexible feeder 12 is mounted on this outlet protrusion 11. The function of this feeder 12 is to transport a medical irrigation solution from the syringe 1. The elongated flexible feeder 12 is placed in the duct 13 of the angled narrowing 6 and of the bush-shaped ending 8. A protruding ending or tip 14 of the elongated flexible feeder 12 protrudes to the outside of the apparatus and, during the irrigation procedure, is inserted into the root canals of the tooth 10.

The procedure for irrigating canal roots with the use of the dental apparatus according to the present invention is as follows. The syringe 1 is filled with the irrigation fluid, for example sodium hypochlorite; next, the protruding ending 14 of the elongated flexible feeder 12 is introduced into and placed in the root canal of the tooth 10, and, then, the plunger 2 is pressed. The fluid is under pressure and flows with a turbulent whirling that lasts until the pressure ceases. This turbulent whirling of the fluid flow 16 helps to more thoroughly clean the root canals of tooth 10, and, simultaneously, it washes out organic detritus from the root canals. During this process the syringe cylinder unit may advance forwards providing an extra internal flow of fluid to give a flushing action deeper into the root canal. The waste matter then flows out at vacuum through the opening that leads to the suction duct 9, and thence to the outside of the mouth as shown by the arrow 17. The bush-shaped ending 8 of the angled narrowing 6 makes it possible to continuously introduce a cleansing fluid into a tooth being treated through the elongated flexible feeder 12, and, simultaneously, to hygienically and completely remove the cleansing fluid to the outside of the oral cavity. Preferably, a flexible, circular, 0.1 to 0.2 mm thick gasket 15 can be placed at a front surface of the bush-shaped ending 8, between the bush-shaped ending 8 and the tooth 10. The function of this gasket 15 is to seal possible leakage of the used cleaning fluid that might otherwise flow into the oral cavity.

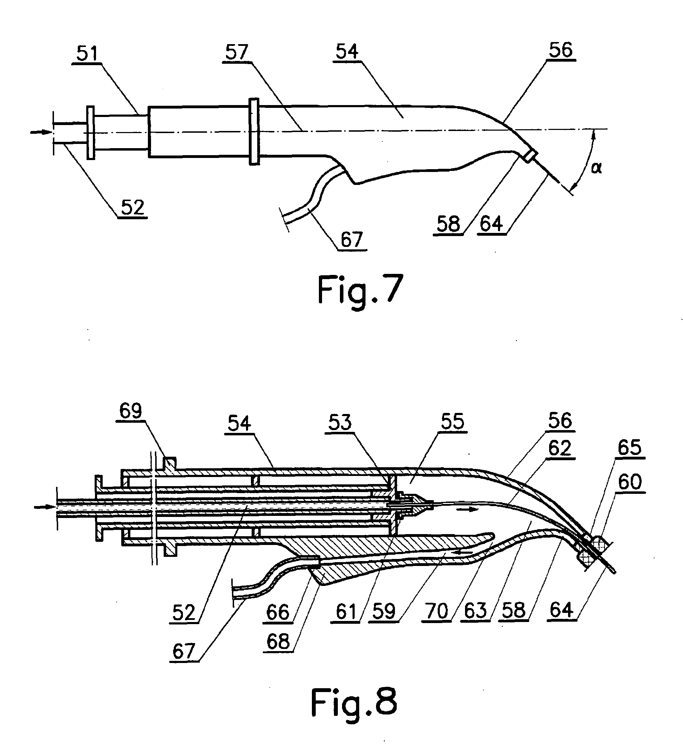

Whilst irrigating the root canals of teeth, the same actions can be performed using a pumping-suction system instead of the syringe 1. This system is shown in Fig. 8. Should a pumping-suction replace the syringe 1, then, the elongated flexible feeder 12 must be connected to the appropriate pipe connector or guide with which is provided this system. Through this elongated flexible feeder 12, the cleansing fluid will be forced by the system into a tooth being treated. Another suction pipe connector will be attached to the suction duct 9 of the head 4. The used cleaning solution will be sucked by this suction pipe connector and removed outside the mouth. Of course, when performing other treatment procedures, the head 4 as described above can be successfully used to clean and irrigate other inaccessible spaces and chambers.

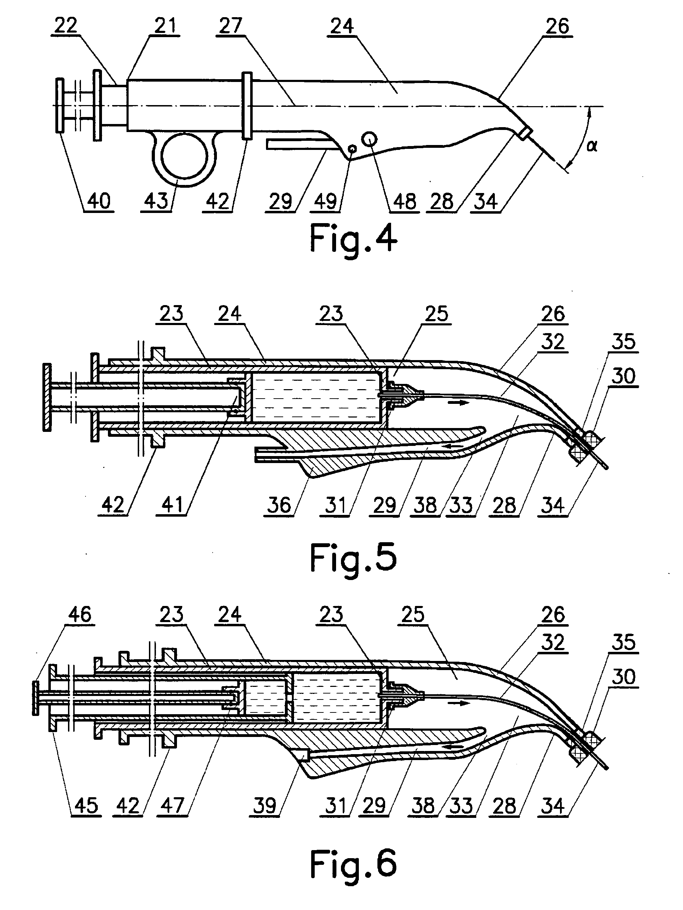

Another modification of the dental instrument, as presented in Figs. 4, 5 and 6, consists of a head 24 with a chamber 25, in which there is a slidably and/or rotary mounted device 22 with a tip 31 through which the cleansing fluid is introduced into the root canals of the teeth 30. This device is a syringe 23 with one plunger 40 or with a telescopic piston 45, 46 shown in Fig. 6. In one of the embodiments, the drive-rod 46 can be removed or inserted into the rear of the piston 47. Prior to commencing the treatment procedure, such a drive-rod 46 is to be mounted in the seat 41 or 47. The head 24 of the dental instrument is shaped as a cylinder 21 with the chamber 25, as mentioned above, and an external flange 42, and/or an integral finger-ring 43 on the exterior of the body, the other side, with an angled narrowing 26 with a pipe connector or a suction duct 29 having a pipe-insertion orifice 39 at its rear end and an inlet 38 at its forward end. The inlet 38 is situated near the outlet of the duct 33 of the bush-shaped ending 28 connected with the chamber 25 of the head 24 and used to bring an elongated flexible feeder 32 with a tip 34 of the device 22 that feeds cleaning fluid into the root canals of the teeth 30. The angled narrowing 26 lies at an acute angle α relative to the longitudinal axis 27 of the head 24, this angle being between 30° and 60°. The angled narrowing 26 has a flexible gasket 35 at its end, and the flexible gasket 35 is mounted on a front face of the bush-shaped ending 28.

In order to stiffen the head, the head 24 is equipped with a web 36. Additionally, the head 24 is equipped with a valve to prevent the vacuum in the chamber 25 of the head from becoming too high. This arrangement can be a diaphragm 48 or a sliding plate mounted on the inner wall of the head 24 and covering an opening in the head 24 and/or an opening 49 in the wall of the head 24.

In Figs. 7 and 8, there is shown another dental apparatus adapted for connecting to it a separate pumping system as mentioned earlier. This dental apparatus consists of a head 54 with a chamber 55, in which there is a slidably and/or rotary mounted device or system 52 that has a guide 53 with an outlet protrusion 61 connected with a fine flexible pipe 62 that makes it possible to insert its end 64 in a duct 63 of an angled narrowing 56 at the front of the apparatus and into the root canal of the tooth 60. In addition, the guide 53 has a sleeve 51 with an inlet orifice to seat a pipe with a cleansing and/or medical fluid pumped into the root canals of the teeth 60. The head 54 of the dental instrument is shaped cylindrically and has an external flange 69 on its exterior and on its front end it has the earlier mentioned angled narrowing 56 with an suction duct 59 having a mounting orifice 66 at the rear end and an inlet 70 at the front. The inlet 70 is situated near the outlet of the duct 63 of the bush-shaped ending 58. The angled narrowing 56 is situated at an acute angle α relative to the longitudinal axis 57 of the head 54, and this angle is about 45°. A suction pipe 67 to remove detritus and solution is connected at one side to a suction device creating a vacuum in the chamber and the suction duct, and at another side is seated in the mounting orifice 66 formed in a web 68 of the head 54. A flexible gasket 65 provides leak-tightness of the contact between the head 54 as in the other designs. This flexible gasket 65 is fixed on the front face of the bush-shaped ending 58.

## Claims

1. A dental apparatus for irrigating root canals of teeth comprising a device with an elongated flexible feeder or a flexible pipe introducing a cleansing and/or medical fluid into the root canals of teeth **characterized in that** the device (1, 22, 52) introducing the cleansing and/or medical fluid is moveably inserted in a chamber (5, 25, 55) formed in a head (4, 24, 54) having an angled narrowing (6, 26, 56) with a bush-shaped ending (8, 28, 58) fitted with a duct (13, 33, 63) and connected with the chamber (5, 25, 55) and used to insert the elongated flexible feeder (12, 32, 62) or the flexible pipe, and a suction duct (9, 29, 59) connected to the duct (13, 33, 63) near its outlet and carrying at vacuum the cleansing and/ or medical fluid flowing out from the root canal to outside of an oral cavity.

2. The dental apparatus according to claim 1, **characterised in that** the chamber (5, 25, 55) is cylindrically shaped.

3. The dental apparatus according to claim 1, **characterised in that** the device introducing the cleansing and/or medical fluid into the root canals of teeth is a syringe (1) with a plunger (2) or a syringe (23) with a telescopic plunger (45), or a syringe with a plunger with a removable drive-rod (46) mounted in a seat.

4. The dental apparatus according to claim 1, **characterised in that** the device introducing the cleansing and/or medical fluid into the root canals of teeth is a syringe (1, 23) with a plunger (2, 40) and an outlet protrusion (11, 31) for detachably attaching the elongated flexible feeder (12, 32) or flexible pipe,

5. The dental apparatus according to claim 1, **characterised in that** the angled narrowing (6, 26, 56) lies at an acute angle (α) relative to the longitudinal axis (7, 27, 57) of the head (4, 24, 54).

6. The dental apparatus according to claim 1, **characterised in that** the angled narrowing (6, 26, 56) lies at an acute angle (α) of between 30° and 60° relative to the longitudinal axis (7, 27, 57) of the head (4, 24, 54).

7. The dental apparatus according to claim 1, **characterised in that** the angled narrowing (6, 26, 56) lies at an acute angle (α) of about 45° relative to the longitudinal axis (7, 27, 57) of the head (4, 24, 54).

8. The dental apparatus according to claim 1, **characterised in that** a flexible gasket (15, 35, 65) is mounted on a front surface of the bush-shaped ending (8, 28, 58) to form a seal between the bush-shaped ending (8, 28, 58) and a tooth being treated (10, 30, 60).

9. The dental apparatus according to claim 1, **characterised in that** a flexible gasket (15, 35, 65) is situated between the bush-shaped ending (8, 28, 58) and a tooth being treated (10, 30, 60).

10. The dental apparatus according to claim 1, **characterised in that** the head (24) is equipped with means to prevent the partial vacuum in the head (24) to become too high and formed by an opening (49) normally covered by a finger and/or a diaphragm (48), a sliding plate or similar, mounted on an inner surface and covering the opening in the head (24) or the opening in the wall of the head (24).

11. The dental apparatus according to claim 1, **characterised in that** the head (24, 54) is equipped with a circumferential flange (42) and/or with a grip (43) or a holder (69), and/or a web (36, 68) or means to keep the head (24, 54) rigid.

12. The dental apparatus according to claim 1, **characterised in that** the device introducing the cleansing and/or medical fluid into the root canals of teeth is a separate pumping system (52) fitted with a guide (53) allowing the pumping system to be moved slidably and/or rotatably in the chamber (55) of the head (54) and forcing the cleansing and/or medical fluid into the tooth being treated (60).

13. The dental apparatus according to claim 12, **characterised in that** the guide (53) is provided with an inlet orifice and an outlet protrusion (61) connected with the flexible pipe (62) to force the cleansing and/or medical fluid into the root canal.

## Patentansprüche

1. Ein Dentalgerät zur Spülung von Wurzelkanälen der Zähne, welches eine Einrichtung mit einer verlängerbaren elastischen Speiseleitung oder ein elastisches Rohr für Einleitung der Reinigungs- und/oder medizinische Flüssigkeit in die Wurzelkanäle der Zähne enthält, **dadurch gekennzeichnet, dass** die Einrichtung (1, 22, 52) für Einleitung der Reinigungs- und/oder medizinischen Flüssigkeit beweglich in einer in einem Kopf (4, 24, 54) ausgebildeten Kammer (5, 25, 55) eingefügt ist, der eine winklige Verengung (6, 26, 56) mit einer schopfförmigen Endung (8, 28, 58) aufweist, wobei die Endung mit einem Kanal (13, 33, 63) ausgestattet ist, der wiederum mit der Kammer (5, 25, 55) verbunden ist, und der Kanal (13, 33, 63) dazu benutzt ist, die verlängerbare elastische Speiseleitung (12, 32, 62) oder ein elastisches Rohr einzufügen, und wobei ein Saugkanal (9, 29, 59), der mit dem Kanal (13, 33, 63) nahe seines Auslasses verbunden ist, beim Unterdruck die Reinigungs- und/oder medizinische Flüssigkeit, die aus dem Wurzelkanal ausfließt, nach außen aus einer Mundhöhle befördert und leert.

2. Das Dentalgerät nach Anspruch 1 **dadurch gekennzeichnet, dass** die Kammer (5, 25, 55) zylindrisch gestaltet ist.

3. Das Dentalgerät nach Anspruch 1 **dadurch gekennzeichnet, dass** die Einrichtung, welche die Reinigungs- und/oder medizinische Flüssigkeit in die Wurzelkanäle der Zähne einleitet, eine Spritze (1) mit einem Kolben (2), oder eine Spritze (23) mit einem Teleskop-Kolben (45), oder eine Spritze mit einem in einem Sitz befestigten auswechselbaren Antriebsstab (46), ist.

4. Das Dentalgerät nach Anspruch 1 **dadurch gekennzeichnet, dass** die Einrichtung, welche die Reinigungs- und/oder medizinische Flüssigkeit in die Wurzelkanäle der Zähne einleitet, eine Spritze (1, 23) mit einem Ventilkolben (2, 40) und einer Auslass-Vorwölbung (11, 31) für die abnehmbar befestigte verlängerbare elastische Speiseleitung (12, 32) oder ein elastisches Rohr ist.

5. Das Dentalgerät nach Anspruch 1 **dadurch gekennzeichnet, dass** die winklige Verengung (6, 26, 56) sich an einem spitzen Winkel (α) bezüglich zur Längsachse (7, 24, 54) des Kopfes (4, 24, 54) befindet.

6. Das Dentalgerät nach Anspruch 1 **dadurch gekennzeichnet, dass** die winklige Verengung (6, 26, 56) sich an einem spitzen Winkel (α) zwischen 30° und 60° bezüglich der Längsachse (7, 27, 57) des Kopfes (4, 24, 54) befindet.

7. Das Dentalgerät nach Anspruch 1 **dadurch gekennzeichnet, dass** die winklige Verengung sich (6, 26, 56) an einem spitzen Winkel (α) von gegen 45° bezüglich der Längsachse (7, 27,57) des Kopfes (4, 24, 54) befindet.

8. Das Dentalgerät nach Anspruch 1 **dadurch gekennzeichnet, dass** eine elastische Dichtung (15, 35, 65) auf der Vorderfläche der schopfförmigen Endung (8, 28, 58) befestigt ist, um eine Abdichtung zwischen der schopfförmigen Endung (8, 28, 58) und dem behandelten Zahn (10, 30, 60) zu bilden.

9. Das Dentalgerät nach Anspruch 1 **dadurch gekennzeichnet, dass** eine elastische Dichtung (15, 35, 65) zwischen der schopfförmigen Endung (8, 28, 58) und dem behandelten Zahn (10, 30, 60) angeordnet ist.

10. Das Dentalgerät nach Anspruch 1 **dadurch gekennzeichnet, dass** der Kopf (24) mit Mitteln ausgestattet ist, um zu verhindern, dass ein Teilvakuum in dem Kopf (24) zu hoch wird, wobei das Mitteln als eine Öffnung (49) im Kopf oder in der Wand des Kopfes (24) gebildet ist und wobei die Öffnung üblicherweise von einem Greifer und/oder von einer an der Innenseite befindlichen Membrane (48) oder einer Gleitplatte oder ähnlichem bedeckt ist.

11. Das Dentalgerät nach Anspruch 1 **dadurch gekennzeichnet, dass** der Kopf (24, 54) mit einem Umfangsflansch (42) ausgestattet ist und/oder mit einem Griff (43), oder einem Halter (69), und/oder einem Gewebeband (36, 68) oder Mitteln, den Kopf (24, 54) stabil zu halten.

12. Das Dentalgerät nach Anspruch 1 **dadurch gekennzeichnet, dass** die Einrichtung, wleche die Reinigungs- und/oder medizinische Flüssigkeit in die Wurzelkanäle der Zähne leitet, ein mit einer Führung (53) ausgerüstetes separates Pumpsystem (52) ist, die so gestaltet ist, das Pumpensystem gleitend und/oder drehend in der Kammer des Kopfes (54) zu bewegen und die Reinigungs- und/oder medizinische Flüssigkeit in die zu behandelnden Zähne zu treiben.

13. Das Dentalgerät nach Anspruch 12 **dadurch gekennzeichnet, dass** die Führung (53) mit einer Einlassmündung und einer Auslassvorwölbung (61) ausgestattet ist, welche mit dem elastischen Rohr (62) verbunden ist, der zum Treiben der Reinigungs- und/oder medizinischen Flüssigkeit in den Wurzelkanal verwendet wird.

## Revendications

1. Un appareil dentaire pour irriguer les canaux radiculaires des dents comprennant un dispositif avec un feeder flexible allongé ou un tuyau flexible introduissant un fluid de nettoyage et/ou un fluid médical dans les canaux radiculaires des dents, **caractérisé en ce que** le dispositif (1, 22, 52) introduissant le fluid de nettoyage et/ou le fluid médical est mouvantement inséré dans une chambre (5, 25, 55) formée dans une tête (4, 24, 54) équipée d'un étranglement angulaire (6, 26, 56) avec un bout en forme du manchon (8, 28, 58) équipée d'une conduite (13, 33, 63) et raccordé à la chambre (5, 25, 55) et utilisé pour insérer le feeder flexible allongé (12, 32, 62) ou un tuyau flexible, et une conduite aspirante (9, 29, 59) raccordé à la conduite (13, 33, 63) près de son embouchure, et transportant à vide le fluid de nettoyage et/ou le fluid médical coulant dehors du canal radiculair d'une cavité buccale.

2. L'appareil dentaire selon la revendication 1, **caractérisé en ce que** la chambre (5, 25, 55) est de forme cylindrique.

3. L'appareil dentaire selon la revendication 1, **caractérisé en ce que** le dispositif introduissant le fluid de nettoyage et/ou le fluid médical dans les canaux radiculaires des dents est une seringue (1) avec un piston (2) ou une seringue (23) avec un piston télescopique (45), ou une seringue avec un piston ayant une tige amovible (46) monté dans un siège.

4. L'appareil dentaire selon la revendication 1, **caractérisé en ce que** le dispositif introduissant le fluid de nettoyage et/ou le fluid médical dans les canaux radiculaires des dents est une seringue (1, 23) avec un piston (2, 40) et une prise en saillie (11, 31) pour fixation amovible du feeder flexible allongé (12, 32) ou du tuyau flexible.

5. L'appareil dentaire selon la revendication 1, **caractérisé en ce que** l'étranglement angulaire (6, 26, 56) se trouve à un angle aigu (α) par rapport à l'axe longitudinal (7, 27, 57) de la tête (4, 24, 54).

6. L'appareil dentaire selon la revendication 1, **caractérisé en ce que** l'étranglement angulaire (6, 26, 56) se trouve à un angle aigu (α) entre 30° et 60° par rapport à l'axe longitudinal (7, 27, 57) de la tête (4, 24, 54).

7. L'appareil dentaire selon la revendication 1, **caractérisé en ce que** l'étranglement angulaire (6, 26, 56) se trouve à un angle aigu (α) d'environ 45° par rapport à l'axe longitudinal (7, 27, 57) de la tête (4, 24, 54).

8. L'appareil dentaire selon la revendication 1, **caractérisé en ce que** le joint plat souple (15, 35, 65) est monté sur une surface frontale du bout en forme du manchon (8, 28, 58) pour former un joint d'étanchéité entre le bout en forme du manchon (8, 28, 58) et la dent traitée (10, 30, 60).

9. L'appareil dentaire selon la revendication 1, **caractérisé en ce que** le joint plat souple (15, 35, 65) est situé entre le bout en forme du manchon (8, 28, 58) et la dent traitée (10, 30, 60).

10. L'appareil dentaire selon la revendication 1, **caractérisé en ce que** la tête (24) est équipée de moyens de prévenir le vide partiel dans la tête (24) de devenir trop élevé et formés par une ouverture (49) normalement couverte par un doigt et/ou d'un diaphragme (48), une plaque de glissement ou similaire, montés sur une surface intérieure et portant sur l'ouverture de la tête (24) ou de l'ouverture dans le mur de la tête (24).

11. L'appareil dentaire selon la revendication 1, **caractérisé en ce que** la tête (24, 54) est équipée de d'une bride circulaire (42) et/ou d'une griffe (43) ou d'une poignée (69), et/ou d'un raidisseur (36, 68) ou les moyens de garder la tête (24, 54) rigide.

12. L'appareil dentaire selon la revendication 1, **caractérisé en ce que** le dispositif introduissant le fluid de nettoyage et/ou le fluid médical dans les canaux radiculaires des dents est un distinct système de pompage (52) muni d'un guide (53) permettant le système de pompage d'être déplacé par glissement et/ou rotation dans la chambre (55) de la tête (54) et fournissant le fluid de nettoyage et/ou le fluid médical dans la dent traitée (60).

13. L'appareil dentaire selon la revendication 12, **caractérisé en ce que** le guide (53) est fourni avec un orifice d'entrée et une prise en saillie (61) liés à la conduite flexible (62) pour forcer le fluid de nettoyage et/ou le fluid médical dans le canal radiculair.
